# EUROPÄISCHE PATENTSCHRIFT

(11) **EP 1 017 537 B1**
(45) Veröffentlichungstag und Bekanntmachung des Hinweises auf die Patenterteilung: **23.10.2002**
(21) Anmeldenummer: 98940040.3
(22) Anmeldetag: 04.09.1998
(51) Int. Cl.: B24B 21/00, B24B 27/00, B24B 41/06, B23Q 3/00

(54) **BANDSCHLEIFVORRICHTUNG MIT SCHWENKBARER SCHLEIFEINHEIT UND INTEGRIERTEN, AUFKLAPPBAREN ANSCHLÄGEN**
BELT-TYPE GRINDING MACHINE WITH A RECLINABLE GRINDING UNIT AND INTEGRATED FLIP-TYPE STOPS
MEULEUSE A BANDE DOTEE D'UNE UNITE DE MEULAGE INCLINABLE ET DE BUTEES INTEGREES RABATTABLES

(30) Priorität: 25.09.1997 CH 226097
(43) Veröffentlichungstag der Anmeldung: 12.07.2000
(73) Patentinhaber: KÜNDIG AG, CH-8620 Wetzikon (CH)
(72) Erfinder: KÜNDIG, Stephan, CH-8640 Rapperswil (CH)
(86) Internationale Anmeldenummer: CH9800382
(87) Internationale Veröffentlichungsnummer: WO99015313

(56) Entgegenhaltungen:
- WO-A-96/37339
- US-A- 4 967 627

## Beschreibung

Die vorliegende Erfindung beschreibt eine Bandschleifvorrichtung mit aufklappbaren Anschlägen. Zu Ihrer Illustration dienen nachfolgende Zeichnungen. Diese zeigen in
Zeichnung 1 eine herkömmliche Anordnung einer Bandschleifmaschine,
Zeichnung 2 eine herkömmliche Anordnung einer sogenannten Furnierschleifvorrichtung,
Zeichnung 3 eine in der Praxis bekannte Bandschleifvorrichtung in der Verwendung mit abgeklappten Anschlägen,
Zeichnung 4 die selbe Vorrichtung wie Zeichnung 3, jedoch mit aufgeklappten Anschlägen,
Zeichnung 5 die der Erfindung zugrundeliegende Anordnung in der Ausgangslage mit den Anschlägen unter dem beweglichen Auflagetisch,
Zeichnung 6 die selbe Anordnung, jedoch mit zurückgezogenem Auflagetisch,
Zeichnung 7 wiederum die selbe Anordnung, jedoch zusätzlich mit abgeklapptem Auflagetisch,
Zeichnung 8 erneut die selbe Anordnung, jedoch mit aufgegeklappten Anschlägen und wieder zugestelltem Auflagetisch,
Zeichnung 9 eine analoge Anordnung wie Zeichnung 8, jedoch mit schräggestelltem Schleifbandträger,
Zeichnung 10 die selbe Anordnung wie Zeichnung 9, jedoch nach erfolgtem Nachschieben des Auflagetisches um die bei der Schrägstellung des Schleifbandträgers entstandene Öffnung.

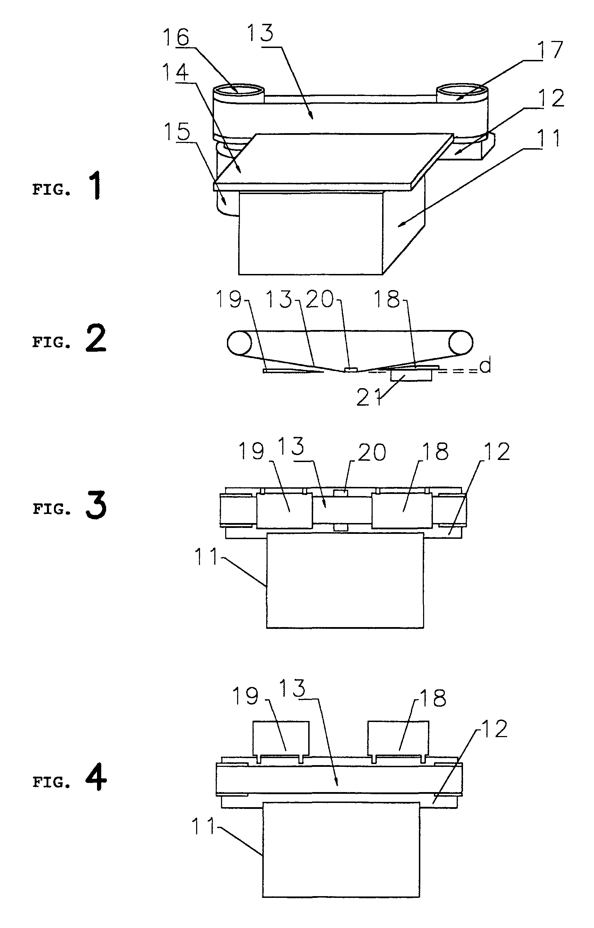

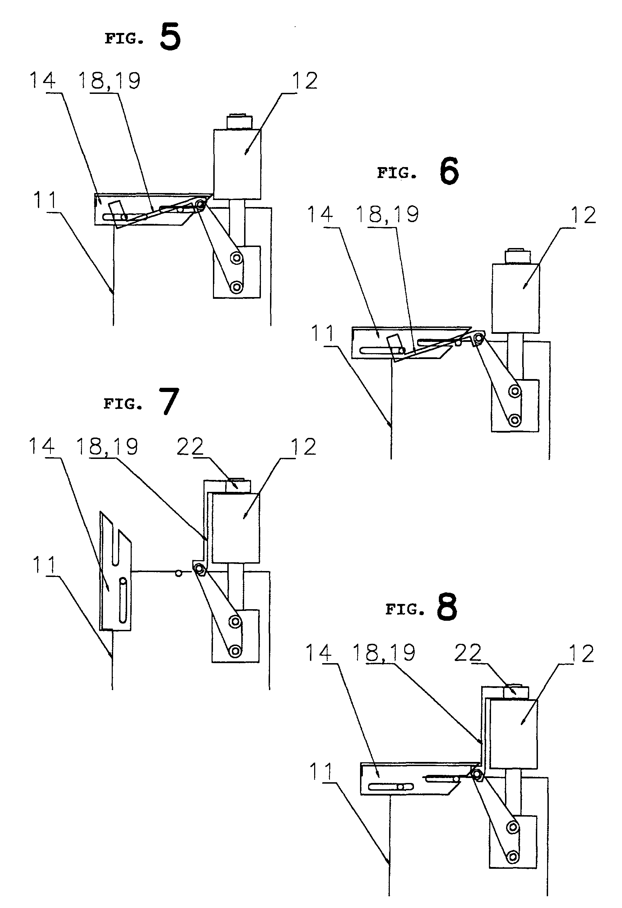

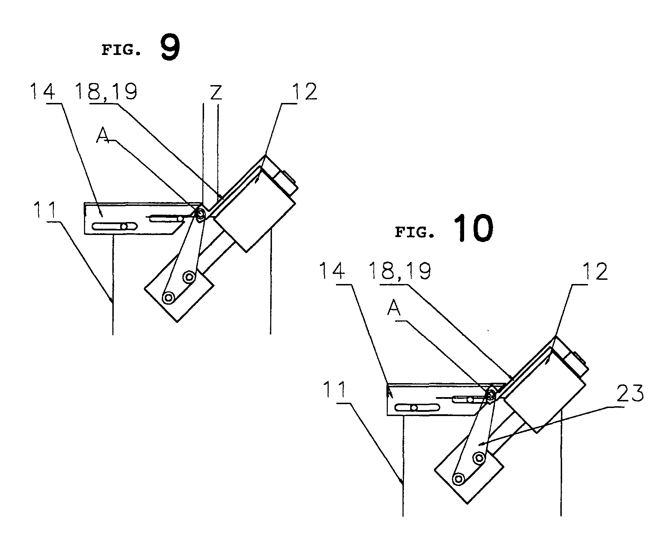

Die Erfindung beschreibt die Weiterentwicklung einer Bandschleifmaschine bekannter Bauart, wie sie in der Praxis auch als Kantenschleifmaschine bekannt ist. Die Konstruktionsprinzipien solcher herkömmlicher Kantenschleifmaschinen sind in Zeichnungen 1, 2, 3 und 4 dargestellt. Zeichnung 1 zeigt die Ansicht einer üblichen Kantenschleifmaschine mit dem Gestell 11, dem Schleifbandträger 12, dem Schleifband 13, dem Auflagetisch 14, einer mit einem Motor 15 verbundenen Antriebswalze 16 und einer Umlenkwalze 17. Das zu schleifende Werkstück wird in der Regel manuell gegen das laufende Schleifband 13 gedrückt, wobei der Abtrag im wesentlichen von der Wahl der Schleifbandkörnung und der Zeitdauer bestimmt wird, während welcher das Werkstück gegen das Schleifband 13 gehalten wird. Eine exakte Bemessung der Spanabnahme kann so kaum erfolgen. Bei Schleifvorgängen, die eine präzisere und zuverlässigere Bemessung der Spanabnahme verlangen, beispielsweise beim Schleifen von furnierbelegten Kanten, versieht man solche Kantenschleifmaschinen deshalb mit einer sogenannten Furnierschleifvorrichtung. Das Prinzip einer Furnierschleifvorrichtung ist in der Grundriss-Zeichnung 2 dargestellt. Das Schleifband 13 wird von zwei Anschlägen 18,19 abgedeckt und nur in einer Öffnung zwischen diesen für den Schleifvorgang freigegeben. In der Öffnung ist ein sogenanntes Schleifkissen 20, eine mit weichen und wärmedämmenden Materialien (Gummi, Graphitbelag) belegte Metallplatte, montiert, gegen welches geschliffen wird. Der maximale Abtrag beim Schleifen des Werkstückes 21 wird durch die Distanz d begrenzt, mit der das auf dem Schleifkissen 20 liegende Schleifband 13 vor den Anschlag 18 zu liegen kommt. Solche Furnierschleifvorrichtungen werden entweder bedarfsweise auf die Maschine montiert oder sind auf dem Schleifbandträger 12 bereits vorhanden. Letztere Anordnung zeigen die Zeichnung 3 und 4 im Aufriss. Bei Bedarf werden die Anschläge 18,19 auf den Schleifbandträger 12 gemäss Zeichnung 3 heruntergeklappt, bei Nichtverwendung werden Sie gemäss Zeichnung 4 hochgeklappt. In dieser Position können sie allerdings das freie Arbeiten an der Maschine behindern. Das Schleifkissen 20 steht lose zur Verfügung und wird bei Einsatz der Anschläge 18,19 zwischen diesen hinter das Schleifband 13 geklemmt.

Im Gegensatz zu der bekannten Anordnung gemäss Zeichnungen 3 und 4 beschreibt die vorliegende Erfindung eine Bandschleifvorrichtung, bei der die Anschläge 18,19 bei Nichtverwendung unter einen horizontal verschiebbaren und wegklappbaren Auflagetisch 14 zu liegen kommen. Sie können bei Bedarf und nach dem Zurückfahren und Wegklappen des Auflagetisches 14 zum Schleifband 12 hochgeklappt werden. Die Zeichnungen 5, 6, 7 und 8 zeigen den Ablauf im Seitenriss. In Zeichnung 5 liegen die Anschläge 18,19 unter dem Auflagetisch 14. Die Zeichnung 6 illustriert das Zurückfahren des Auflagetisches 14. Schliesslich zeigt die Zeichnung 7 das Abklappen des Auflagetisches 14 und das Aufklappen der Anschläge 18,19 auf den Schleifbandträger 12. Danach werden die Anschläge über eine Halterung 22 fest mit dem Schleifbandträger 12 verbunden und das Schleifkissen gemäss bekannter Konstruktion in die Oeffnung zwischen die Anschläge 18, 19 gesteckt. Zeichnung 8 zeigt den Auflagetisch 12 wieder in seiner Ausgangsstellung, nun aber bei hochgeklappten Anschlägen 18,19. In dieser Anordnung werden die Anschläge 18,19 nun ohne weitere Handhabungen vom Schleifbandträger 12 in jede jeweilige Schräglage mitgeführt.

Die Erfindung löst zudem die Frage der Drehachse A für die Anschläge 18,19 und für den Schleifbandträger 12 bei dessen Schrägstellung. Die Zeichnung 9 zeigt die Position der Drehachse A im Bereich der Unterkante der Anschläge 18,19. Entscheidend ist, dass die Drehachse für die Anschläge 18,19 mit der Drehachse für den Schleifbandträger 12 identisch ist. Die Zeichnung 9 zeigt ferner die bei der Schrägstellung entstehende Öffnung z zwischen dem Auflagetisch 14 und den Anschlägen 18,19 und Zeichnung 10 illustriert, wie diese Öffnung durch das Vorfahren des Auflagetisches 14 geschlossen wird. Bei der Ausführung der Erfindung ist so vorzugehen, dass der Dreharm 23 für die Schwenkung des Schleifbandträgers 12 um eine am Gestell 11 montierte Achse dreht, die ihrerseits die Drehachse für die Anschläge 18,19 darstellt. Der Auflagetisch 14 kommt über dieser Achse auch auf das Gestell 11 zu liegen.

## Patentansprüche

**1.** Bandschleifvorrichtung umfassend
- ein Gestell (11)
- einen Auflagetisch (14)
- einen Schleifbandträger (12) mit einer mit einem Motor (15) verbundenen Antriebsrolle (16) und einer Umlenkrolle (17)
- zwei, der Abdeckung des Schleifbandes dienende und im Gebrauch das Band nur im Bereich einer zwischen ihnen liegenden Öffnung freigebender Anschläge (18, 19)
- ein aufsteckbares Schleifkissen (20),
**gekennzeichnet durch**
- die Platzierung der zwei Anschläge (18, 19) unter dem Auflagetisch und eine KIappvorrichtung, die es ermöglicht diese Anschläge (18, 19) auf die Höhe des Schleifbandes aufzuklappen

**2.** Vorrichtung gemäss Patentanspruch 1, **dadurch gekennzeichnet, dass** der Schleifbandträger (12) schwenkbar ist.

**3.** Vorrichtung gemäss Patentansprüchen 1 und 2, **dadurch gekennzeichnet, dass** die Drehachse (A) für die Anschläge (18,19) mit der Drehachse (A) des Schleifbandträgers (12) identisch ist.

**4.** Vorrichtung gemäss Patentanspruch 1, **dadurch gekennzeichnet, dass** der Auflagetisch (14) horizontal verschiebbar ist.

**6.** Vorrichtung gemäss Patentanspruch 1, **dadurch gekennzeichnet, dass** der Auflagetisch (14) vertikal abklappbar ist.

**7.** Vorrichtung gemäss Patentanspruch 1, **dadurch gekennzeichnet, dass** der Auflagetisch (14) den Anschlägen (18,19) bei Nichtverwendung eine geschlosse Aufbewahrung bietet.

## Claims

**1.** Belt sanding machine including :
- amount(11)
- support table (14)
- sanding belt support (12) drive roller (16) powered by a motor (15), and a deflecting roller (17)
- two stops (18, 19) to cover the sanding belt, and to uncover it during use only in the area of the opening between them
- a removable sanding block (20).
**Characterised in that**
- the positioning of the two stops (18, 19) under the support table and a hinged device enables these stops (18, 19) to close at the level of the sanding belt.

**2.** Device as per Patent Claim 1, **characterised in that** the sanding belt support (12) can be rotated.

**3.** Device as per Patent Claim 1 and 2, **characterised in that** the axis of rotation (A) of the stops (18, 19) is identical to that of the axis of rotation (A) of the sanding belt support (12).

**4.** Device as per Patent Claim 1, **characterised in that** the support table (14) can be displaced horizontally.

**6.** Device as per Patent Claim 1, **characterised in that** the support table (14) is vertically hinged.

**7.** Device as per Patent Claim 1, **characterised in that** the stops (18, 19) are enclosed by the support table (14) when not in use for protection.

## Revendications

**1.** Meuleuse à bande se composant :
- d'un socle (11)
- d'une table d'appui (14)
- d'un support de bande à meuler (12) avec une poulie de commande (16) reliée à un moteur (15) et une poulie de renvoi (17)
- deux butées (18, 19) servant à couvrir la bande à meuler et libérant la bande, lors de l'utilisation, seulement dans la zone de l'ouverture se trouvant entre elles
- un coussin de meulage rétractable (20).
**Caractérisée par**
- le positionnement des deux butées (18, 19) sous la table d'appui et un dispositif rabattable, qui permet de rabattre ces butées (18, 19) à la hauteur de la bande à meuler.

**2.** Dispositif selon la revendication 1, **caractérisé en ce que** le support de la bande à meuler (12) est orientable.

**3.** Dispositif selon la revendication 1 et 2, **caractérisé en ce que** l'axe de rotation (A) des butées (18, 19) est identique à l'axe de rotation (A) du support de la bande à meuler (12).

**4.** Dispositif selon la revendication 1, **caractérisé en ce que** la table d'appui (14) peut être déplacée à l'horizontale.

**6.** Dispositif selon la revendication 1, **caractérisé en ce que** la table d'appui (14) peut être rabattue à la verticale.

**7.** Dispositif selon la revendication 1, **caractérisé en ce que** la table d'appui (14) donne la possibilité aux butées (18, 19) d'être fermées en cas d'inutilisation.
